# EUROPÄISCHE PATENTSCHRIFT

(11) **EP 4 431 710 B1**
(45) Veröffentlichungstag und Bekanntmachung des Hinweises auf die Patenterteilung: **14.01.2026**
(21) Anmeldenummer: 24161468.4
(22) Anmeldetag: 05.03.2024
(51) Int. Cl.: F02B 19/10, F02B 19/12, F02B 19/16

(54) **AUFNAHMEBAUTEIL FÜR EIN VORKAMMERBAUTEIL EINES VERBRENNUNGSMOTORS**
MOUNTING COMPONENT FOR A PRE-CHAMBER COMPONENT OF A COMBUSTION ENGINE
ÉLÉMENT DE RÉCEPTION POUR UN COMPOSANT DE PRÉCHAMBRE D'UN MOTEUR À COMBUSTION INTERNE

(30) Priorität: 13.03.2023 DE 102023106127
(43) Veröffentlichungstag der Anmeldung: 18.09.2024
(73) Patentinhaber: Innio Jenbacher GmbH & Co OG, 6200 Jenbach (AT)
(72) Erfinder: ULLRICH, Thomas, 6123 Vomperbach (AT); KOFLER, Michael, 6133 Weerberg (AT); FANKHAUSER, Thomas, 6292 Finkenberg (AT); ZAHNER, Lukas David, 83022 Rosenheim (DE)
(74) Vertreter: Torggler & Hofmann Patentanwälte - Innsbruck

(56) Entgegenhaltungen:
- EP-A1- 2 539 563
- AU-A1- 2020 276 402
- CN-A- 104 040 138
- US-A- 5 222 993

## Beschreibung

Die vorliegende Erfindung betrifft ein Aufnahmebauteil für ein Vorkammerbauteil eines Verbrennungsmotors mit den Merkmalen des Oberbegriffs des Anspruchs 1, eine Anordnung eines solchen Aufnahmebauteils mit einem Vorkammerbauteil sowie einen Verbrennungsmotor mit einem solchen Aufnahmebauteil.

Gattungsgemäße Aufnahmebauteile für Vorkammerbauteile eines Verbrennungsmotors umfassen
- einen Vorkammerbauteilaufnahmebereich, welcher Vorkammerbauteilaufnahmebereich dazu ausgebildet ist, das zumindest einen Großteil einer Vorkammer des Verbrennungsmotors umgebende und/oder ausbildende Vorkammerbauteil aufzunehmen und
- wenigstens einen Zündmittelaufnahmebereich, welcher wenigstens eine Zündmittelaufnahmebereich dazu ausgebildet ist, ein Zündmittel - vorzugsweise eine Zündkerze - aufzunehmen und in Richtung des Vorkammerbauteilaufnahmebereichs auszurichten. Siehe zum Beispiel CN 104 040 138 A (Hyun Dai Heavy Ind. Co.).

Es ist aus dem Stand der Technik bekannt, entsprechende Aufnahmebauteile beispielsweise in Zylinderköpfe eines Verbrennungsmotors einzusetzen, welche dazu dienen, einerseits ein Zündmittel aufzunehmen und andererseits das die Vorkammer ausbildende Bauteil aufzunehmen.

Diese Aufnahmebauteile werden in der Regel aus einem Stahlwerkstoff hergestellt und dermaßen im Zylinderkopf positioniert, dass sie die über die Vorkammer und das Zündmittel in das Aufnahmebauteil eingeleitete Wärme direkt an den umgebenden Zylinderkopf ableiten können.

Auch Ausgestaltungen, bei denen das Aufnahmebauteil direkt durch ein Kühlmedium, beispielsweise Kühlwasser, umströmt wird, um Wärme aktiv gekühlt zu werden, sind bekannt.

Folglich entsteht dahingehend an das Aufnahmebauteil die Anforderung, dass die Wärmeleitfähigkeit und/oder die Fähigkeit zum Transport hoher thermischen Energien durch das Aufnahmebauteil umzusetzen.

Dementsprechend ist es auch bekannt, Aufnahmebauteile gezielt durch die Wahl des Werkstoffes mit einer möglichst guten Wärmeleitfähigkeit bereitzustellen, wobei beispielsweise Ausführungsformen von Aufnahmebauteilen aus Kupfer bekannt sind, welche sich jedoch durch die weit höheren Werkstoffpreise gegenüber Ausführungsformen aus Stahllegierungen nicht weit verbreitet haben.

Folglich ergibt sich aus dem Stand der Technik der Wunsch nach einem Aufnahmebauteil, durch welches die Wärmeabfuhr von in einer Vorkammer oder durch eine Zündkerze entstehende Wärmeenergien verbessert werden kann und/oder durch welche dennoch eine wirtschaftliche und/oder ressourcensparende Ausführungsvariante darstellt wird.

Diese Aufgabe wird im Zuge der vorliegenden Erfindung durch ein Aufnahmebauteil mit den Merkmalen des Anspruchs 1, einer Anordnung eines entsprechenden Aufnahmebauteils mit einem Vorkammerbauteil mit den Merkmalen des Anspruchs 12 sowie einem Verbrennungsmotor mit den Merkmalen des Anspruchs 14 gelöst.

Erfindungsgemäß ist vorgesehen, dass ein Aufnahmebauteil für ein Vorkammerbauteil eines Verbrennungsmotors Folgendes umfasst:
- einen Vorkammerbauteilaufnahmebereich, welcher Vorkammerbauteilaufnahmebereich dazu ausgebildet ist, das zumindest einen Großteil einer Vorkammer des Verbrennungsmotors umgebende und/oder ausbildende Vorkammerbauteil aufzunehmen und
- wenigstens einen Zündmittelaufnahmebereich, welcher wenigstens eine Zündmittelaufnahmebereich dazu ausgebildet ist, ein Zündmittel - vorzugsweise eine Zündkerze - aufzunehmen und in Richtung des Vorkammerbauteilaufnahmebereichs auszurichten,
wobei das Aufnahmebauteil in einem ersten Bereich aus einem ersten Werkstoff und in einem zweiten Bereich aus einem zweiten, vom ersten Werkstoff unterscheidenden, Werkstoff besteht, wobei der zweite Bereich den Vorkammerbauteilaufnahmebereich zumindest teilweise beinhaltet.

Durch das Ausführen des Aufnahmebauteils durch zwei unterschiedliche Werkstoffe wird die Möglichkeit geschaffen, dass durch ein einziges Aufnahmebauteil bereichsspezifisch auf unterschiedliche Anforderungen in dem jeweiligen Bereich des Aufnahmebauteils eingegangen werden kann.

Somit kann in einem zweiten Bereich, welcher zumindest teilweise den Vorkammerbauteilaufnahmebereich beinhaltet, auf die erhöhten Anforderungen hinsichtlich der Wärmeleitfähigkeit eingegangen werden und dieser Bereich durch einen Werkstoff ausgebildet werden, welcher entsprechende Eigenschaften besitzt, wohingegen ein weiterer (erster) Bereich des Aufnahmebauteils, welcher geringeren thermischen Einflüssen ausgesetzt ist, durch einen Werkstoff ausgebildet werden kann, welcher geringere thermische Leiteigenschaften aufweist, wodurch in einem wirtschaftlichen Sinne ressourcensparend gehandelt werden kann.

Folglich kann gemäß der Erfindung ressourcensparend ein Aufnahmebauteil bereitgestellt werden, wobei seltene und gefragte Werkstoffe mit entsprechenden Eigenschaften, welche oft auch mit aufwendigen und energieintensiven Herstellungsverfahren verbunden sind, sparsam verwendet werden.

Zusammenfassend kann somit durch die vorliegende Erfindung ein Aufnahmebauteil bereitgestellt werden, welches bei erhöhten thermischen Eigenschaften hinsichtlich der Wärmeabfuhr dennoch eine ökonomische und ökologische Anwendung bei der Herstellung ermöglicht.

Es kann auch vorgesehen sein, dass die Erfindung ihren Einsatz bei bereits bekannten Systemen des Standes der Technik und entsprechenden Verbrennungsmotoren (wie beispielsweise in der Beschreibungseinleitung beschrieben) findet und vorzugsweise nachträglich installiert wird.

Verbrennungsmotoren - insbesondere stationäre Verbrennungsmotoren - können dazu eingesetzt werden, Generatoren zur Stromerzeugung anzutreiben. Solche Ausgestaltungen werden oft als Gensets bezeichnet.

Unter Verbrennungsmotoren können thermische Arbeitsmaschinen verstanden werden, bei welchen durch eine Verbrennung thermisch freiwerdende Energie in mechanische Arbeit umgesetzt wird, wie beispielsweise bei Ottomotoren, insbesondere Gasmotoren, Dieselmotoren oder Ähnlichem.

Vorteilhafte Ausführungsformen der Erfindung sind in den abhängigen Ansprüchen definiert.

Vorzugsweise kann vorgesehen sein, dass der erste Werkstoff durch eine Stahllegierung und/oder der zweite Werkstoff durch eine Kupferlegierung umgesetzt ist. Es kann dabei vorgesehen sein, dass der zweite Werkstoff aus einer Kupferlegierung umgesetzt ist, bei welcher Kupfer den Hauptbestandteil der Legierung bildet.

Es hat sich ein weiterer positiver Effekt beim Vorsehen des zweiten Werkstoffes als Kupferlegierung bei der Abdichtung des Vorkammerbauteils gegenüber des Aufnahmebauteil gezeigt, da durch die - beispielweise gegenüber Stahl - weichen Eigenschaften einer Kupferlegierung im Vorkammerbauteilaufnahmebereich beim Verbinden mit dem Vorkammerbauteil bessere Dichteigenschaften auch ohne vorsehen separater Dichtelemente erreicht werden können.

Es kann vorgesehen sein, dass der erste Bereich den wenigstens einen Zündmittelaufnahmebereich beinhaltet und/oder in einem aufgenommenen Zustand des Zündmittels das Zündmittel zumindest teilweise umgibt.

Vorzugsweise kann vorgesehen sein, dass das Aufnahmebauteil wenigstens eine Zuführleitung aufweist, welche wenigstens eine Zuführleitung dazu ausgebildet ist, die Vorkammer und/oder das Vorkammerbauteil mit einem Brennstoff, Luft oder einem Brennstoff-Luft-Gemisch zu versorgen, insbesondere welche zumindest eine Zuführleitung zumindest teilweise - beispielweise vollständig - im zweiten Bereich angeordnet ist.

Es kann vorgesehen sein, dass das Aufnahmebauteil wenigstens eine Vorkammergasventilhülsenaufnahme zur Aufnahme eines Vorkammergasventils aufweist, welche Vorkammergasventilhülsenaufnahme beispielsweise mit der wenigstens einen Zuführleitung verbunden ist.

Vorzugsweise kann vorgesehen sein, dass die wenigstens eine Vorkammergasventilhülsenaufnahme dazu ausgebildet ist, das Vorkammergasventil aufzunehmen, wobei direkt von der wenigstens einen Vorkammergasventilhülsenaufnahme die wenigstens eine Zuführleitung abzweigt und die wenigstens eine Zuführleitung dazu ausgebildet ist, von einem in der wenigstens einen Vorkammergasventilhülsenaufnahme positionieren Vorkammergasventil bereitgestellten Brennstoff, Luft oder Brennstoff-Luft-Gemisch dem Vorkammerbauteilaufnahmebereich zuzuführen, worüber der Brennstoff, die Luft oder das Brennstoff-Luft-Gemisch einer Vorkammer zuführbar ist.

Es kann vorgesehen sein, dass das Aufnahmebauteil mit dem Vorkammerbauteilaufnahmebereich dazu ausgebildet ist, gemeinsam mit dem Vorkammerbauteil die Vorkammer des Verbrennungsmotors zu begrenzen und somit auszubilden.

Vorzugsweise kann vorgesehen sein, dass der wenigstens eine Zündmittelaufnahmebereich einen Bereich der Aufnahme des Zündmittels mit dem Vorkammerbauteilaufnahmebereich verbindet und dermaßen ausgebildet ist, dass das Zündmittel im Wesentlichen im Bereich zur Aufnahme des Zündmittels anordenbar ist, sodass ein Zündbereich des Zündmittels durch den wenigstens einen Zündmittelaufnahmebereich hindurch zum Vorkammerbauteilaufnahmebereich ausgerichtet wird, um eine Zündung in der Vorkammer durchführen zu können.

Es kann vorgesehen sein, dass das Aufnahmebauteil eine Außenwand von im Wesentlichen zylindrischer Grundform aufweist, welche dazu ausgebildet ist, in einen Zylinderkopf des Verbrennungsmotors eingesetzt zu werden.

Vorzugsweise kann vorgesehen sein, dass das Aufnahmebauteil eine hülsenförmige Grundstruktur aufweist, welche den Vorkammerbauteilaufnahmebereich und den wenigstens einen Zündmittelaufnahmebereich umgibt.

Es kann vorgesehen sein, dass der wenigstens eine Zündmittelaufnahmebereich den, vorzugsweise hülsenförmig ausgebildeten, Vorkammerbauteilaufnahmebereich des Aufnahmebauteils mit einem, vorzugsweise hülsenförmig ausgebildeten, in einem aufgenommenen Zustand des Zündmittels das Zündmittel zumindest teilweise umgebenden Bereich des Aufnahmebauteils verbindet.

Vorzugsweise kann vorgesehen sein, dass der erste Bereich und der zweite Bereich durch zwei Bauteile ausgebildet sind, welche über ein Verbindungsverfahren - vorzugsweise ein Reibschweißverfahren - zum Aufnahmebauteil stoffschlüssig verbunden sind. Auch stoffschlüssige Verfahren, wie beispielsweise andere Schweißverfahren oder Lötverfahren, insbesondere Hartlötverfahren, sind durchaus denkbar.

Weiters wird Schutz begehrt für eine Anordnung eines Vorkammerbauteils und eines erfindungsgemäßen Aufnahmebauteils, wobei das Vorkammerbauteil mit dem Aufnahmebauteil über den Vorkammerbauteilaufnahmebereich des Aufnahmebauteils verbunden, vorzugsweise verschweißt, ist, wobei durch das Aufnahmebauteil und das Vorkammerbauteil zumindest teilweise eine Vorkammer des Verbrennungsmotors ausgebildet wird.

Das Vorkammerbauteil kann kappenförmig ausgebildet sein, wobei die Öffnung durch den Vorkammerbauteilaufnahmebereich des Aufnahmebauteils abgeschlossen wird.

Vorzugsweise kann vorgesehen sein, dass das Vorkammerbauteil wenigstens eine, vorzugsweise eine Vielzahl an, Überströmöffnungen aufweist, welche die Vorkammer mit der Vorkammerumgebung (in eingebautem Zustand der Vorkammer im Verbrennungsmotor mit einem Brennraum des Verbrennungsmotors) verbindet.

Es kann vorgesehen sein, dass ein Zündmittel, insbesondere eine Zündkerze, im wenigstens einen Zündmittelaufnahmebereich angeordnet ist, vorzugsweise wobei ein Zündbereich des Zündmittels durch den wenigstens einen Zündmittelaufnahmebereich des Aufnahmebauteils hindurch in die Vorkammer ragt.

Weiters wird Schutz begehrt für einen Verbrennungsmotor, insbesondere einen gasbetriebenen Hubkolbenmotor mit einem erfindungsgemäßen Aufnahmebauteil und/oder eine Anordnung eines Vorkammerbauteils mit einem erfindungsgemäßen Aufnahmebauteil.

Weitere Vorteile und Einzelheiten der Erfindung ergeben sich aus den Figuren sowie der dazugehörigen Figurenbeschreibung. Dabei zeigt:
- Fig. 1: eine Einbaulage eines Aufnahmebauteils in einen Zylinderkopf eines Verbrennungsmotors, und
- Fig. 2 bis 4: einen Aufnahmebauteil gemäß einem ersten Ausführungsbeispiel der Erfindung.

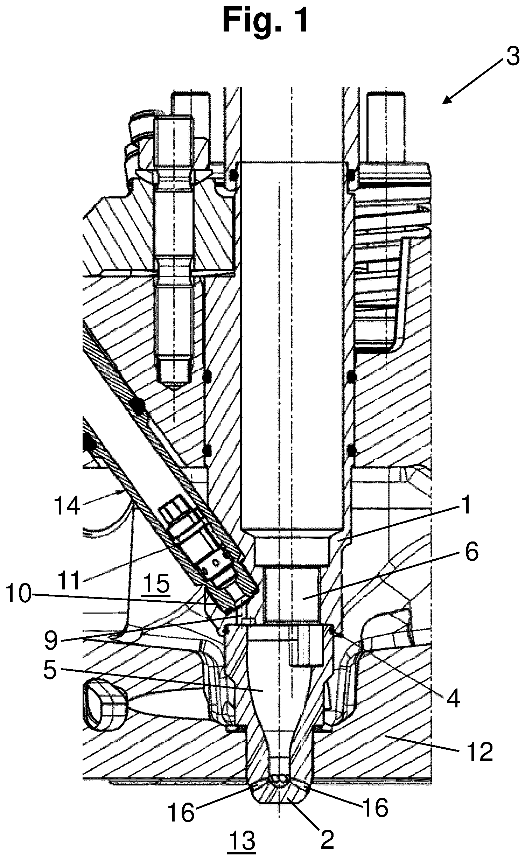

Fig. 1 zeigt eine Einbaulage eines Aufnahmebauteils 1 in einem Zylinderkopf 12 eines Verbrennungsmotors 3.

Das Aufnahmebauteil 1 ist dabei mit seiner zylinderförmigen Grundstruktur in eine entsprechende Öffnung eines Zylinderkopfs 12 des Verbrennungsmotors 3 eingesetzt.

In einem Vorkammerbauteilaufnahmebereich 4 des Aufnahmebauteils 1 ist das Vorkammerbauteil 2 aufgesetzt, welches das Aufnahmebauteil 1 in Richtung eines Brennraums 13 gegenüber dem Zylinderkopf 12 abstützt.

Das Aufnahmebauteil 1 weist des Weiteren einen Zündmittelaufnahmebereich 6 auf, welcher als Gewindebereich ausgebildet ist.

In diesem Zündmittelaufnahmebereich 6 kann ein Zündmittel - in diesem Ausführungsbeispiel eine Zündkerze - eingesetzt werden, welches durch den Zündmittelaufnahmebereich 6 hindurch in die Vorkammer 5 ragt.

Die Vorkammer 5 wird einerseits durch das Vorkammerbauteil 2 und andererseits das Aufnahmebauteil 1 im Bereich des Vorkammerbauteilaufnahmebereichs 4 umgeben und somit ausgebildet.

Weiters weist das Aufnahmebauteil 1 eine Vorkammergasventilhülsenaufnahme 10 auf, in welcher das Vorkammergasventil 11 über die Vorkammergasventilhülse 14 angeordnet ist.

Das Aufnahmebauteil 1, das Vorkammerbauteil 2 sowie die Vorkammergasventilhülse 14 und das Vorkammergasventil 11 sind durch ein Kühlmedium über den Kühlkanal 15 des Zylinderkopfs 12 umströmbar, wodurch eine aktive Kühlung dieser Bauteile vorgenommen werden kann.

Um den Kühlkanal 15 gegenüber der Umgebung abzudichten, sind die jeweiligen Bauteile mittels einzelner als O-Ring ausgebildeter Dichtungen gegenüber dem Zylinderkopf 12 abgedichtet.

Im Betrieb des Verbrennungsmotors 3 wird über das Vorkammergasventil 11 und die Zuführleitung 9 des Aufnahmebauteils 1 Luft, Brennstoff oder ein Luft-Brennstoff-Gemisch der Vorkammer 15 zugeführt, welches anschließend über ein im Zündmittelaufnahmebereich 6 angeordnetes Zündmittel entzündet wird und in der Vorkammer 5 verbrennt.

Durch die Verbrennung in der Vorkammer 5 (insbesondere der durch die Verbrennung entstehende Expansion) werden sogenannte Zündfackeln über die Überströmkanäle 16 des Vorkammerbauteils 2 in den Brennraum 13 des Verbrennungsmotors 3 übergeführt, welche die Verbrennung im Brennraum 13 anregen.

Entsprechende Vorkammerkonzepte bei Verbrennungsmotoren 3 werden durch den Stand der Technik als "Zündverstärker" verwendet. Entsprechende Zündverstärker finden vor allem bei Verbrennungsmotoren mit großen Brennräumen (ab ca. 2,5 Liter) ihre Anwendung.

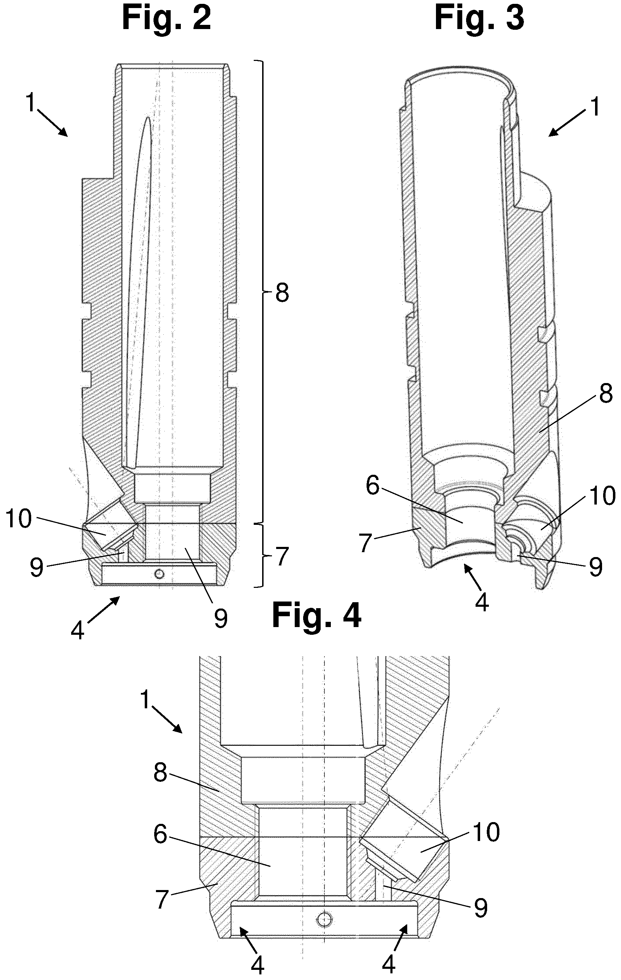

Die Figuren 2 bis 4 zeigen ein Ausführungsbeispiel eines Aufnahmebauteils 1 gemäß einem ersten Ausführungsbeispiel der Erfindung, wobei die Fig. 2 einen Schnitt entlang der Längsachse darstellt und Fig. 3 eine perspektivische Ansicht der Fig. 2.

Fig. 4 stellt eine Detailansicht des dem Brennraum 13 zugewandten Endes des Aufnahmebauteils 1 in einem Einbauzustand des Aufnahmebauteils 1 in einem Verbrennungsmotor 3 dar.

Das Aufnahmebauteil des Ausführungsbeispiels der Fig. 2 bis 4 weist einen Vorkammerbauteilaufnahmebereich 4 auf, welcher Vorkammerbauteilaufnahmebereich 4 dazu ausgebildet ist, das Vorkammerbauteil 2 aufzunehmen.

Dieser Vorkammerbauteilaufnahmebereich 4 bildet zusammen mit dem Vorkammerbauteil 2 zumindest teilweise die Vorkammer 5 aus.

Der Vorkammerbauteilaufnahmebereich 4 ist über die Zuführleitung 9 des Aufnahmebauteils 1 mit der Vorkammergasventilhülsenaufnahme 10 des Aufnahmebauteils 1 verbunden.

Durch die Vorkammergasventilhülsenaufnahme 10 kann ein Vorkammergasventil 11 aufgenommen werden, über welches Luft, Brennstoff oder ein Luft-Brennstoff-Gemisch über die Zuführleitung 9 der Vorkammer 5 zugeführt werden kann.

Weiters weist das Aufnahmebauteil 1 dieses Ausführungsbeispiels einen Zündmittelaufnahmebereich 6 auf, welcher Zündmittelaufnahmebereich 6 dazu ausgebildet ist, ein Zündmittel - in diesem Ausführungsbeispiel eine Zündkerze - aufzunehmen und in Richtung des Vorkammerbauteilaufnahmebereichs 4 auszurichten.

In anderen Worten wird eine Zündkerze in den als Gewinde ausgebildeten Zündmittelaufnahmebereich 6 eingeschraubt, sodass die Zündkerze durch den Zündmittelaufnahmebereich 6 hindurch in die Vorkammer 5 ragt und somit die Elektroden der Zündkerze in der Vorkammer 5 positioniert werden, während die Vorkammer 5 und der Vorkammerbauteilaufnahmebereich 4 über die Zündkerze selbst nach oben hin abgedichtet werden.

In einem vom Brennraum 13 abgewandten Ende des Aufnahmebauteils 1 wird das Zündmittel - die Zündkerze - vom Aufnahmebauteil rotatorisch umschlossen.

Das Aufnahmebauteil 1 ist in diesem Ausführungsbeispiel durch einen ersten Bereich 7 und einen zweiten Bereich 8 ausgebildet, welche aus Gründen der Übersichtlichkeit durch unterschiedliche Strichlierungen dargestellt sind, auch wenn diese Bereiche 7, 8 Teil eines einzigen gemeinsamen Bauteils, dem Aufnahmebauteil 1, sind.

Der erste Bereich 7 dieses Ausführungsbeispiels beinhaltet den Vorkammerbauteilaufnahmebereich 4, die Zuführleitung 9, teilweise den Zündmittelaufnahmebereich 6 und ebenfalls teilweise die Vorkammergasventilhülsenaufnahme 10.

Dieser erste Bereich 7 dieses Ausführungsbeispiels ist durch einen ersten Werkstoff ausgebildet, welcher durch eine Kupferlegierung umgesetzt ist.

Diese Kupferlegierung besitzt erhöhte Wärmeleitfähigkeiten, sodass diese thermisch während der Verbrennung hochbelasteten Bauteile des Aufnahmebauteils 1 durch die verbesserte Wärmeleitfähigkeit die Wärmeenergie an den umgebenden Zylinderkopf 12 und/oder das an das Aufnahmebauteil herangeführte Kühlmedium ableiten kann.

Der zweite Bereich 8 ist durch einen zweiten Werkstoff ausgebildet, welcher sich vom ersten Werkstoff unterscheidet. In diesem Ausführungsbeispiel ist der zweite Bereich 8 durch eine Stahllegierung umgesetzt.

Der erste Bereich 7 und der zweite Bereich 8 sind zur Herstellung durch zwei separate Bauteile umgesetzt, welche während des Herstellungsverfahrens mittels eines Reibschweißverfahrens miteinander zum Aufnahmebauteil 1 verbunden werden.

### Bezugszeichenliste:

- 1: Aufnahmebauteil
- 2: Vorkammerbauteil
- 3: Verbrennungsmotor
- 4: Vorkammerbauteilaufnahmebereich
- 5: Vorkammer
- 6: Zündmittelaufnahmebereich
- 7: Erster Bereich
- 8: Zweiter Bereich
- 9: Zuführleitung
- 10: Vorkammergasventilhülsenaufnahme
- 11: Vorkammergasventil
- 12: Zylinderkopf
- 13: Brennraum
- 14: Vorkammergasventilhülse
- 15: Kühlkanal
- 16: Überströmkanal

## Patentansprüche

1. Aufnahmebauteil für ein Vorkammerbauteil (2) eines Verbrennungsmotors (3), umfassend:
- einen Vorkammerbauteilaufnahmebereich (4), welcher Vorkammerbauteilaufnahmebereich (4) dazu ausgebildet ist, das zumindest einen Großteil einer Vorkammer (5) des Verbrennungsmotors (3) umgebende und/oder ausbildende Vorkammerbauteil (2) aufzunehmen, und
- wenigstens einen Zündmittelaufnahmebereich (6), welcher wenigstens eine Zündmittelaufnahmebereich (6) dazu ausgebildet ist, ein Zündmittel aufzunehmen und in Richtung des Vorkammerbauteilaufnahmebereiches (4) auszurichten,
**dadurch gekennzeichnet, dass** das Aufnahmebauteil (1) in einem ersten Bereich (7) aus einem ersten Werkstoff und in einem zweiten Bereich (8) aus einem zweiten, sich vom ersten Werkstoff unterscheidenden, Werkstoff besteht, wobei der zweite Bereich (8) den Vorkammerbauteilaufnahmebereich (4) zumindest teilweise beinhaltet.

2. Aufnahmebauteil nach Anspruch 1, wobei der erste Werkstoff durch eine Stahllegierung und/oder der zweite Werkstoff durch eine Kupferlegierung umgesetzt ist.

3. Aufnahmebauteil nach einem der vorhergehenden Ansprüche, wobei der erste Bereich (7) den wenigstens einen Zündmittelaufnahmebereich (6) beinhaltet und/oder in einem aufgenommenen Zustand des Zündmittels das Zündmittel zumindest teilweise umgibt.

4. Aufnahmebauteil nach wenigstens einem der vorhergehenden Ansprüche, wobei das Aufnahmebauteil (1) wenigstens eine Zuführleitung (9) aufweist, welche wenigstens eine Zuführleitung (9) dazu ausgebildet ist, die Vorkammer (5) und/oder das Vorkammerbauteil (2) mit einem Brennstoff, Luft oder einem Brennstoff-Luft-Gemisch zu versorgen und welche zumindest eine Zuführleitung (9) zumindest teilweise im zweiten Bereich (8) angeordnet ist.

5. Aufnahmebauteil nach wenigstens einem der vorhergehenden Ansprüche, wobei das Aufnahmebauteil (1) wenigstens eine Vorkammergasventilhülsenaufnahme (10) zur Aufnahme eines Vorkammergasventils (11) aufweist.

6. Aufnahmebauteil nach wenigstens einem der vorhergehenden Ansprüche, wobei das Aufnahmebauteil (1) mit dem Vorkammerbauteilaufnahmebereich (4) dazu ausgebildet ist, gemeinsam mit dem Vorkammerbauteil (2) die Vorkammer (5) des Verbrennungsmotors (3) zu begrenzen und somit auszubilden.

7. Aufnahmebauteil nach wenigstens einem der vorhergehenden Ansprüche, wobei der wenigstens eine Zündmittelaufnahmebereich (6) einen Bereich zur Aufnahme des Zündmittels mit dem Vorkammerbauteilaufnahmebereich (4) verbindet und dermaßen ausgebildet ist, dass das Zündmittel im Wesentlichen im Bereich zur Aufnahme des Zündmittels anordenbar ist, sodass ein Zündbereich des Zündmittels durch den wenigstens einen Zündmittelaufnahmebereich (6) hindurch zum Vorkammerbauteilaufnahmebereich (4) ausgerichtet wird, um eine Zündung in der Vorkammer (5) durchführen zu können.

8. Aufnahmebauteil nach wenigstens einem der vorhergehenden Ansprüche, wobei das Aufnahmebauteil (1) eine Außenwandung von im Wesentlichen zylindrischer Grundform aufweist, welche dazu ausgebildet ist, in einen Zylinderkopf (12) des Verbrennungsmotors (3) eingesetzt zu werden.

9. Aufnahmebauteil nach wenigstens einem der vorhergehenden Ansprüche, wobei das Aufnahmebauteil (1) eine hülsenförmige Grundstruktur aufweist, welche den Vorkammerbauteilaufnahmebereich (4) und den wenigstens einen Zündmittelaufnahmebereich (6) umgibt.

10. Aufnahmebauteil nach dem vorhergehenden Anspruch, wobei der wenigstens eine Zündmittelaufnahmebereich (6) den Vorkammerbauteilaufnahmebereich (4) des Aufnahmebauteils (1) mit einem in einem aufgenommenen Zustand des Zündmittels das Zündmittel zumindest teilweise umgebenden Bereich des Aufnahmebauteils (1) verbindet.

11. Aufnahmebauteil nach wenigstens einem der vorhergehenden Ansprüche, wobei der erste Bereich (7) und der zweite Bereich (8) durch zwei Bauteile ausgebildet sind, welche über ein Verbindungsverfahren zum Aufnahmebauteil (1) stoffschlüssig verbunden sind.

12. Anordnung eines Vorkammerbauteils (2) und eines Aufnahmebauteils (1) nach wenigstens einem der vorhergehenden Ansprüche, wobei das Vorkammerbauteil (2) mit dem Aufnahmebauteil (1) über den Vorkammerbauteilaufnahmebereich (4) des Aufnahmebauteils (1) verbunden ist, wobei durch das Aufnahmebauteil (1) und das Vorkammerbauteil (2) eine Vorkammer (5) des Verbrennungsmotors (3) zumindest teilweise ausgebildet wird.

13. Anordnung nach dem vorhergehenden Anspruch, wobei ein Zündmittel im wenigstens einen Zündmittelaufnahmebereich (6) angeordnet ist.

14. Verbrennungsmotor mit einem Aufnahmebauteils (1) nach wenigstens einem der Ansprüche 1 bis 11 und/oder einer Anordnung eines Vorkammerbauteils (2) und eines Aufnahmebauteils (1) nach einem der Ansprüche 12 oder 13.

## Claims

1. A mounting component for a pre-chamber component (2) of a combustion engine (3), comprising:
- a pre-chamber component mounting region (4), which pre-chamber component mounting region (4) is designed to receive the pre-chamber component (2) surrounding and/or forming at least a large part of a pre-chamber (5) of the combustion engine (3), and
- at least one ignition means mounting region (6), which at least one ignition means mounting region (6) is designed to receive an ignition means and align it in the direction of the pre-chamber component mounting region (4),
**characterized in that** the mounting component (1) consists in a first region (7) of a first material and in a second region (8) of a second material which differs from the first material, wherein the second region (8) at least partially contains the pre-chamber component mounting region (4).

2. The mounting component according to claim 1, wherein the first material is implemented as a steel alloy and/or the second material is implemented as a copper alloy.

3. The mounting component according to any one of the preceding claims, wherein the first region (7) contains the at least one ignition means mounting region (6) and/or in a mounted state of the ignition means, at least partially surrounds the ignition means.

4. The mounting component according to at least one of the preceding claims, wherein the mounting component (1) has at least one supply line ( 9), which at least one supply line (9) is designed to supply the pre-chamber (5) and/or the pre-chamber component (2) with a fuel, air or a fuel-air mixture and which at least one supply line (9) is arranged at least partially in the second region (8).

5. The mounting component according to at least one of the preceding claims, wherein the mounting component (1) has at least one pre-chamber gas valve sleeve receptacle (10) for mounting a pre-chamber gas valve (11).

6. The mounting component according to at least one of the preceding claims, wherein the mounting component (1) with the pre-chamber component mounting region (4) is designed to jointly define and thus form the pre-chamber (5) of the combustion engine (3) together with the pre-chamber component (2).

7. The mounting component according to at least one of the preceding claims, wherein the at least one ignition means mounting region (6) connects a region for mounting the ignition means with the pre-chamber component mounting region (4) and is designed such that the ignition means can be arranged substantially in the region for mounting the ignition means, so that an ignition region of the ignition means is aligned through the at least one ignition means mounting region (6) to the pre-chamber component mounting region (4) in order to be able to carry out ignition in the pre-chamber (5).

8. The mounting component according to at least one of the preceding claims, wherein the mounting component (1) has an outer wall of a substantially cylindrical base shape, which is designed to be inserted into a cylinder head (12) of the combustion engine (3).

9. The mounting component according to at least one of the preceding claims, wherein the mounting component (1) has a sleeve-shaped base structure which surrounds the pre-chamber component mounting region (4) and the at least one ignition means mounting region (6).

10. The mounting component according to the preceding claim, wherein the at least one ignition means mounting region (6) connects the pre-chamber component mounting region (4) of the mounting component (1) with a region of the mounting component (1) which, in a mounted state of the ignition means, at least partially surrounds the ignition means.

11. The mounting component according to at least one of the preceding claims, wherein the first region (7) and the second region (8) are formed by two components which are materially connected to the mounting component (1) via a connection method.

12. An arrangement of a pre-chamber component (2) and a mounting component (1) according to at least one of the preceding claims, wherein the pre-chamber component (2) is connected to the mounting component (1) via the pre-chamber component mounting region (4) of the mounting component (1), wherein a pre-chamber (5) of the combustion engine (3) is at least partially formed by the mounting component (1) and the pre-chamber component (2).

13. The arrangement according to the preceding claim, wherein an ignition means is arranged in at least one ignition means mounting region (6).

14. A combustion engine with a mounting component (1) according to at least one of claims 1 to 11 and/or an arrangement of a pre-chamber component (2) and a mounting component (1) according to any one of claims 12 or 13.

## Revendications

1. Composant de réception pour un composant de préchambre (2) d'un moteur à combustion interne (3), comprenant :
- une zone de réception de composant de préchambre (4), laquelle zone de réception de composant de préchambre (4) est conçue pour recevoir le composant de préchambre (2) entourant et/ou formant au moins une grande partie d'une préchambre (5) du moteur à combustion interne (3), et
- au moins une zone de réception de moyen d'allumage (6), laquelle au moins une zone de réception de moyen d'allumage (6) est formée pour recevoir un moyen d'allumage et l'orienter en direction de la zone de réception du composant de préchambre (4),
**caractérisé en ce que** le composant de réception (1) dans une première zone (7) est constitué d'un premier matériau et dans une seconde zone (8) d'un second matériau différent du premier matériau, dans lequel la seconde zone (8) contient au moins partiellement la zone de réception de composant de préchambre (4).

2. Composant de réception selon la revendication 1, dans lequel le premier matériau est mis en œuvre par un alliage d'acier et/ou le second matériau par un alliage de cuivre.

3. Composant de réception selon l'une quelconque des revendications précédentes, dans lequel la première zone (7) contient l'au moins une zone de réception de moyen d'allumage (6) et/ou entoure au moins partiellement le moyen d'allumage dans un état de réception du moyen d'allumage.

4. Composant de réception selon au moins l'une des revendications précédentes, dans lequel le composant de réception (1) présente au moins une conduite d'alimentation (9), laquelle au moins une conduite d'alimentation (9) est formée pour alimenter la préchambre (5) et/ou le composant de préchambre (2) en un combustible, en air ou en un mélange combustible-air et laquelle au moins une conduite d'alimentation (9) est disposée au moins partiellement dans la seconde zone (8).

5. Composant de réception selon au moins l'une quelconque des revendications précédentes, dans lequel le composant de réception (1) présente au moins un logement de manchon de vanne de gaz de préchambre (10) pour recevoir une vanne de gaz de préchambre (11).

6. Composant de réception selon au moins l'une quelconque des revendications précédentes, dans lequel le composant de réception (1) est conçu avec la zone de réception de composant de préchambre (4) pour délimiter et donc former la préchambre (5) du moteur à combustion interne (3) conjointement avec le composant de préchambre (2).

7. Composant de réception selon au moins l'une quelconque des revendications précédentes, dans lequel l'au moins une zone de réception de moyen d'allumage (6) relie une zone de réception du moyen d'allumage à la zone de réception de composant de préchambre (4) et est conçue de manière que le moyen d'allumage puisse être disposé sensiblement dans la zone de réception du moyen d'allumage de sorte qu'une zone d'allumage du moyen d'allumage soit orientée vers la zone de réception de composant de préchambre (4) à travers l'au moins une zone de réception de moyen d'allumage (6) afin de pouvoir effectuer un allumage dans la préchambre (5).

8. Composant de réception selon au moins l'une quelconque des revendications précédentes, dans lequel le composant de réception (1) présente une paroi extérieure de forme de base sensiblement cylindrique, qui est conçue pour être insérée dans une culasse (12) du moteur à combustion interne (3).

9. Composant de réception selon au moins l'une quelconque des revendications précédentes, dans lequel le composant de réception (1) présente une structure de base en forme de douille qui entoure la zone de réception de composant de préchambre (4) et l'au moins une zone de réception de moyen d'allumage (6).

10. Composant de réception selon la revendication précédente, dans lequel l'au moins une zone de réception de moyen d'allumage (6) relie la zone de réception du composant de préchambre (4) du composant de réception (1) à une zone du composant de réception (1) entourant au moins partiellement le moyen d'allumage dans un état reçu du moyen d'allumage.

11. Composant de réception selon au moins l'une quelconque des revendications précédentes, dans lequel la première zone (7) et la seconde zone (8) sont formées par deux composants qui sont reliés par un procédé de liaison au composant de réception (1) par liaison de matière.

12. Ensemble constitué d'un composant de préchambre (2) et d'un composant de réception (1) selon au moins l'une quelconque des revendications précédentes, dans lequel le composant de préchambre (2) est relié au composant de réception (1) par le biais de la zone de réception de composant de préchambre (4) du composant de réception (1), dans lequel une préchambre (5) du moteur à combustion interne (3) est formée au moins partiellement par le composant de réception (1) et le composant de préchambre (2).

13. Ensemble selon la revendication précédente, dans lequel un moyen d'allumage est disposé dans au moins une zone de réception de moyen d'allumage (6).

14. Moteur à combustion interne avec un composant de réception (1) selon au moins l'une quelconque des revendications 1 à 11 et/ou un ensemble constitué d'un composant de préchambre (2) et d'un composant de réception (1) selon l'une quelconque des revendications 12 ou 13.
